# EUROPÄISCHE PATENTSCHRIFT

(11) **EP 1 844 326 B1**
(45) Veröffentlichungstag und Bekanntmachung des Hinweises auf die Patenterteilung: **04.11.2009**
(21) Anmeldenummer: 06706288.5
(22) Anmeldetag: 19.01.2006
(51) Int. Cl.: G01N 29/24, G01N 29/44

(54) **VERFAHREN ZUR REDUKTION VON DIGITALISIERTEN DATEN IN EINEM EMAT-MOLCH**
METHOD FOR REDUCING DIGITAL DATA IN AN EMAT PIG
PROCEDE DE REDUCTION DE DONNEES NUMERISEES DANS UN RACLEUR EMAT

(30) Priorität: 05.02.2005 DE 102005005386
(43) Veröffentlichungstag der Anmeldung: 17.10.2007
(73) Patentinhaber: Forschungszentrum Karlsruhe GmbH, 76131 Karlsruhe (DE)
(72) Erfinder: STRIPF, Helmut, 76344 Eggenstein-Leopoldshafen (DE); BALZER, Matthias, 76149 Karlsruhe (DE)
(86) Internationale Anmeldenummer: PCT/EP2006/000425
(87) Internationale Veröffentlichungsnummer: WO 2006/081946

(56) Entgegenhaltungen:
- DE-A1- 4 040 190
- BALZER M ET AL: "Online data reduction with a dsp-fpga multiprocessor system" DIGITAL SIGNAL PROCESSING, 2002. DSP 2002. 2002 14TH INTERNATIONAL CONFERENCE ON SANTORINI, GREECE 1-3 JULY 2002, PISCATAWAY, NJ, USA,IEEE, US, Bd. 2, 1. Juli 2002 (2002-07-01), Seiten 819-822, XP010599978 ISBN: 0-7803-7503-3
- DEUTSCH V ET AL: "3.4.3.6 Rechnergestützte Fehlerbeschreibung" ULTRASCHALLPRUEFUNG: GRUNDLAGEN UND INDUSTRIELLE ANWENDUNGEN, 1997, Seiten 133-141, XP002278716
- BARBIAN O A ET AL: "Signal enhancement by noise elimination of transit time measurement data by ultrasonic inspection of ferritic and austenitic materials-ALOK. I" MATERIALS TESTING WEST GERMANY, Bd. 23, Nr. 11, 11. November 1981 (1981-11-11), Seiten 379-383, XP009067220 ISSN: 0025-5300

## Beschreibung

Die Erfindung betrifft ein Verfahren zur Reduktion von digitalisierten Daten, die von aus Messwerten gewonnenen, digitalisierten Daten in einem (Electro Magnetic Accoustic Trans-ducer-) EMAT-Molch, der Risse, Korrosion oder sonstige Abnormalitäten/Verletzungen an einer Rohrwand detektiert und mit Hilfe von Rechnermodulen komprimiert.

Zum Prüfen von Rohrleitungen, insbesondere für den Öl- oder Gastransport, sind Prüfmolche bekannt, die an ihrer äußeren Mantelwand um den Umfang spezifisch empfindliche Sensoren angebracht haben. Mit diesen Sensoren wird der Zustand der Leitung erfühlt und kann dadurch überprüft werden. Die dazu geeigneten Sensoren beruhen auf unterschiedlich physikalischen Prinzipien. Bekannt sind etwa piezoelektrische, elektroakustische, magnetische und die oben erwähnten EMAT-Sensoren.

Die mit den Sensoren gewonnenen Messdaten werden in elektrisch analoge Signale gewandelt und in einem Analog-Digitalwandler zur Weiterverarbeitung/Verwendung digitalisiert. Beim Lauf durch eine lange Öl-/Gasleitung fallen ungeheure Datenmengen an. Während eines solchen Laufes ist ein solcher Molch nicht mit der Außenwelt verbunden. Die anfallenden Daten müssen daher in einer Form gespeichert werden, die außerhalb der Rohrleitung nach dem Lauf eine Rekonstruktion des Wandzustandes zulässt, der Abnormalitäten/Verletzungen/Defekte an der Rohrwand ortsbestimmbar und zuverlässig quantifizierbar ermöglicht. Selbst moderne Speicher laufen bei einer direkten (1 : 1-) Datenspeicherung über. Die aus den Analogwerten anfallenden Digitaldaten müssen deshalb so reduziert/komprimiert werden, dass die oben geforderte Rekonstruktion gewährleistet ist. Qualitativ heißt das: Daten von unauffälligen/gesunden Wandbereichen der Rohrwand müssen nicht gespeichert werden. Datenreduktionsverfahren bei der Schadenserfassung von langen/sehr langen Rohrleitungswänden dienen also dazu, die wesentlichen Merkmale eines mit einem Defekt der Rohrwand in Zusammenhang gebrachten Signals zu extrahieren und mit einer Mindestzahl von Bits so genau wie möglich darzustellen, um so die Menge der zu speichernden Daten zu reduzieren/minimieren.

Das (Amplitude-Laufzeit-Ortskurve-) ALOK-Verfahren (O. A. Barbian, B. Grohs, R. Licht, "Signalanhebung durch Entstörung von Laufzeit-Messwerten aus Ultraschallprüfungen von ferritischen und austenitischen Werkstoffen - ALOK", Teil 1. Materialprüf. 23 (1981) 379 - 383) selektiert die Spitzen (fachsprachlich: Peaks) der Ultraschalleinhüllenden (-envelopen). Dadurch kann ein hoher Reduktionsfaktor erzielt werden. Wesentliche Information aus dem Signal gehen jedoch bei der Reduktion verloren. So geben die gespeicherten Daten keine Aussage über die Form der Ultraschallreflektion und über den Untergrund im Bereich der selektierten Vektoren. Diese Informationen sind jedoch sehr wichtig für die Bestimmung der Defektstruktur und -größe. Auch werden Spitzenstrukturen im Rauschen als abspeicherwürdig selektiert und verschlechtern damit den Reduktionsfaktor.

Das Dokument "Online data reduction with a DSP-FPGA multiprocessor system", BALZER M ET AL, DIGITAL SIGNAL PROCESSING, 2002. DSP 2002. 2002 14TH INTERNATIONAL CONFERENCE ON SANTORINI, GREECE 1-3 JULY 2002, PISCATAWAY, NJ, USA,IEEE, US, Bd. 2, 1. Juli 2002 (2002-07-01), Seiten 819-822, XP010599978 ISBN: 0-7803-7503-3 beschreibt ein Verfahren zur Reduktion von digitalisierten Daten von Messwerten zur Defektdetektion aus einem Ultraschallmolch. Dabei werden die Spitzenwerte von Amplituden-Laufzeitpaaren mit einem Algorithmus berechnet und die Einhüllende der Maxima bestimmt.

In der DE 4040 190 wird ein Verfahren beschrieben bei dem das Amplitudenmaximum und der Zeitwert bei der Unterschreitung einer vorgebenden Schwelle abgespeichert werden. Das Verfahren bewertet jedoch nicht die Breite und Charakteristik der Einhüllenden (Envelopen). Darüber hinaus verlangt das Verfahren ein mit einem Tiefpassfilter geglättetes Ultraschallsignal.

Bei der EMAT-Technologie erzeugt eine EMAT-Sonde, die aus einem EMAT-Sender und -Empfänger besteht, durch elektrische/magnetische Kräfte einen Ultraschallwellenzug, US-Wellenzug, in der Rohr-/Pipelinewand mit vorgegebener Anzahl Wellenlängen, vorzugsweise 5 - 10 Wellenlängen. Dieser Wellenzug durchläuft die Pipelinewand und wird an Grenzflächen reflektiert. Die reflektierte US-Welle wird vom EMAT-Empfänger detektiert und in ein proportionales elektrisches Signal zurückgewandelt (siehe GB 2 380 794 A). Der Sender kann je nach eingebautem Funktionsgenerator Einzelpulse und Wellen unterschiedlicher Form und Frequenz senden. Typischerweise werden Sensoren mit Senderfrequenzen zwischen etwa 400 kHz und etwa 2 MHz verwendet. Die Daten der elektromagnetischen Sensoren werden mit Hilfe von (Analog-Digital-) AD-Wandlern in einer Auflösung von 12 - 16 bit mit einer Abtastrate von beispielsweise 20 MHz aufgezeichnet. Für einen Prüfmolch mit 50 Sensoren, die zumindest teilweise im Multiplexbetrieb betrieben werden, und einer Prüfgeschwindigkeit von 1 m/sec fallen auf einer Pipelinestrecke von 500 km Länge typischerweise etwa 200 Tbyte an Daten an. Diese Datenmenge muss während des Prüflaufs im fahrenden Molch gespeichert werden, da während dessen Lauf keine Verbindung nach außen besteht.

Je nach dem Stahlgefüge, der Oberflächenstruktur sowie der Beschichtung (fachsprachlich: coating) der Pipeline kann das vom Empfänger detektierte Signal auch bei defektfreiem Stahl sehr stark variieren. Dies führt zu Schwankungen des Signaluntergrundes. Für die Größenbestimmung eines Risses ist jedoch die am Riss reflektierte Echoamplitude in Relation zum Untergrund sehr wichtig.

Damit sich die Datenmenge in abspeicherfähigen Größenordnungen bewegt und der Molch eine wirtschaftliche Laufweite erreicht, muss zwingend eine Datenreduktion durchgeführt werden.

Der Erfindung liegt die Aufgabe zugrunde, durch Kenntnis der Struktur der Daten und deren Gewichtung für die offline Defektbestimmung durch Entwicklung einer speziellen, an die Anforderungen der Signalauswertung angepassten Reduktionsmethode höhere Reduktionsfaktoren zu erzielen.

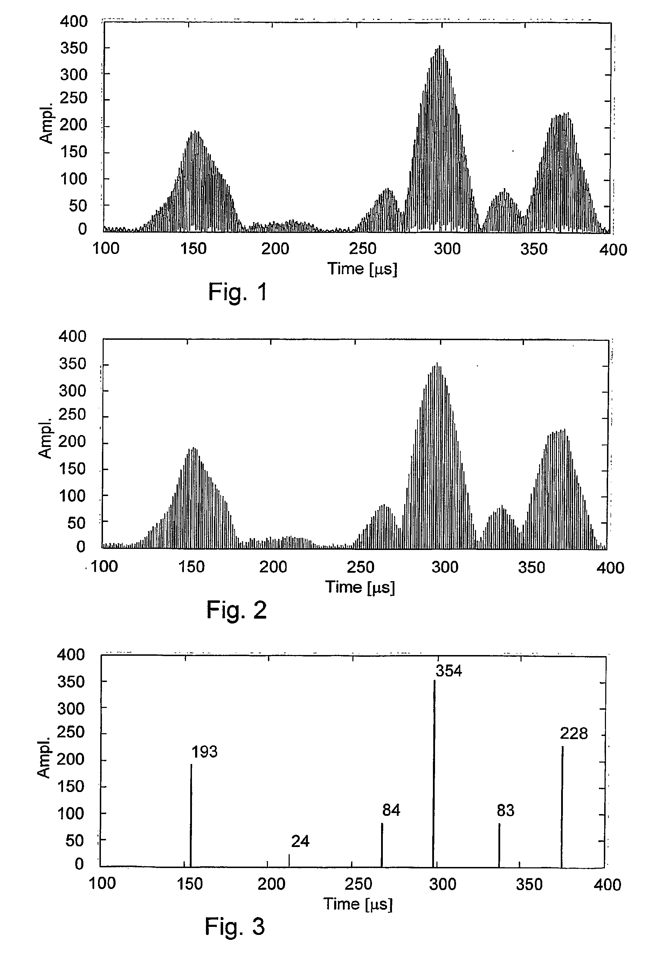

Das Verfahren zur Datenreduktion ist insbesondere in einem EMAT-Molch vorgesehen, der Risse, Korrosion und andere Rohrwandabnormitäten/-defekte bei seinem Lauf durch ein zu untersuchendes Rohr detektiert. Während der Messfahrt werden die analogen Messsignale der elektromagnetischen Sensoren digitalisiert, mit Hilfe von Rechnermodulen komprimiert und in einer im Molch mitfahrenden Datenspeichereinrichtung abgespeichert. Das Verfahren zur Datenreduktion/- kompression untergliedert sich in drei grundlegende Schritte/Methoden zur Bearbeitung der anfallenden Datenmenge:
- die Vorverdichtung,
- die Merkmalsextraktion und
- die Kompression.
Der im Molch installierte EMAT-Sensor besteht aus mindestens einer Sende- und Empfangseinheit. Er erzeugt einen auf die Rohrwand gerichteten Ultraschall-Wellenzug vorgebaren Wellentyps und vorgebbarer Frequenz aus dem Bereich von ca. 400 kHz bis ca. 2 MHz, dessen Echo von der Rohrwand mit dem mindestens einen EMAT-Empfänger detektiert wird. Das Echo wird in ein elektrisches Analogsignal zurückgewandelt, mit einem (Analog-Digital-)AD-Wandler digitalisiert und danach gleichgerichtet (siehe Figur 1).

Die Aufgabe der verbesserten Datenreduktion wird durch die im Anspruch 1 beschriebenen Verfahrensschritte gelöst, die sich in zwei Verfahrensgruppen aufteilen, und zwar:
- der Größenbestimmung einer Defektstelle und
- der Bestimmung des Signaluntergrunds im Nachbarbereich einer Defektstelle.

### Größenbestimmung:

Die Verfahrensschritte zur Größenbestimmung basieren auf einem Algorithmus zur Auswahl von Spitzenwerten, der Amplituden-Laufzeit-Paare, Vektoren, liefert, welche die Maxima der Ultraschall-Einhüllenden anzeigen (siehe Figur 3). Die Laufzeit-Paare werden hier mit Vektor bezeichnet. Die Vektoren werden unterhalb einer parametrisierten Schwelle selektiert und somit das Rauschen extrahiert.

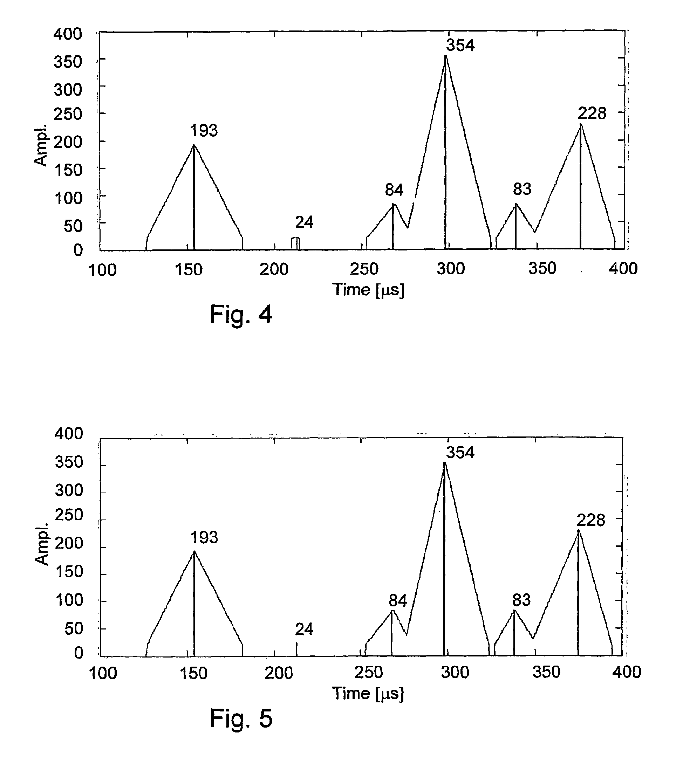

Die Bildung der Einhüllenden/Envelopen vollzieht sich derart, als zu jedem ausgewählten Vektor zusätzlich die Breite der Ultraschall-Einhüllenden bestimmt wird. Hierzu werden aus den den Vektor unmittelbar benachbarten Spitzenamplituden die Minima um jeden Vektor ermittelt, die unterhalb der vorgegebenen Schwelle liegen. Der zeitliche Abstand der Minima zum Zeitwert des Vektors wird abgespeichert. Durch Interpolation zwischen den einzelnen Zeitwerten und Vektoren wird später (offline) eine genügend genaue Rekonstruktion der Einhüllenden/Envelopen gewonnen. Falls zwischen zwei Vektoren die Spitzenamplitude nicht die Schwelle unterschreitet, wird die Spitze mit den minimalen Amplitudenwerten als Minimum bestimmt, welches nachfolgendes Minimum des ersten Vektors und vorhergehendes Minimum des folgenden Vektors ist (siehe Figur 4).

Die Envelope-Vektoren, deren Breite einen Schwellwert unterschreitet, die sogenannte Envelope Breite, werden ausgeschlossen. Die Envelope-Vektoren, deren Form nicht einer vorgegebenen Charakteristik zugeordnet werden können, die sogenannte Envelope-Form, werden auch ausgeschlossen. Der Envelope-Vektor ist also durch die Amplitude und den Zeitwert/Zeitpunkt des Auftretens des jeweiligen Maximums sowie durch die Envelope-Breite und die Envelope-Form bestimmt. Die Charakteristik der Envelope-Form wird durch das Verhältnis der Zeitdifferenzen zwischen dem Zeitwert des Maximums und dem vorhergehenden und dem nachfolgenden Spitzen-/Peakminimum bestimmt. Ist das parametrisierbare Verhältnis z.B. größer als der Wert 2 oder kleiner 0,5 so entspricht die Envelope-Form nicht der vorgegebenen Charakteristik. Der Envelope-Vektor wird dann ausgeschlossen.

Jeder Envelope-Vektor wird durch drei Amplituden-Laufzeit-Paare erfasst, und zwar durch das Maximum, das zeitlich vorhergehende Spitzen-/Peakminimum und das zeitlich nachfolgende Peakminimum.

Durch die Envelope-Bildung, kombiniert mit der Envelope-Breite und der Envelope-Form, wird beim vorverdichteten/vektorisierten Ultraschallsignal eine Merkmalsextraktion durchgeführt, um zu entscheiden, ob das Ultraschallsignal informationstragende Merkmale enthält und damit zu speichern wäre.

### Signaluntergrund:

Da, wie oben schon erläutert wurde, es je nach Stahlgefüge zu Schwankungen des Signaluntergrundes führt, hat die Bestimmung desselben für die Größenbestimmung eines Risses in Relation zum Untergrund hohe Bedeutung. Deshalb wird hier der Zeitbereich des Ultraschallechos in beliebigen Zeitintervallen, mindestens jedoch mit der Dauer von 4 zusammenhängenden Wellenlängen der angewandten Ultraschallfrequenz, mit parametrisierten Startwert und Längewert eingeteilt. In diesen Zeitintervallen werden die Amplituden der Spitzen zu einem intervallspezifischen Summationswert aufsummiert, der dann durch die Anzahl der Spitzen dividiert wird. Damit wird dann darüber gemittelt. Zur Größenbestimmung wird jeder Mittelwert an der zugeordneten Defektstelle ermittelt und gespeichert. Zur Größenbestimmung eines Defektes werden offline die zum Defekt benachbarten Untergrundwerte in azimutaler und radialer Richtung herangezogen.

Eine Datenkompression der selektierten Merkmale wird ohne wichtigen Informationsverlust vorgenommen. Die Daten werden dabei ohne Informationsverlust über den Defekt codiert. Die Zeitwerte werden je nach Bedeutung mit unterschiedlicher Auflösung abgelegt, so dass dadurch ein höherer Kompressionsfaktorfaktor erzielt wird (abhängiger Anspruch 2). Der Zeitwert des Maximums für die Ortsauflösung eines detektierten Defektes ist wesentlich, jedoch sind die Zeitwerte der Envelope-Breite von untergeordneter Bedeutung. Durch Codierung mit unterschiedlicher Zeitauflösung wird ein höherer Kompressionsfaktor erzielt.

Die Bestimmung des Maximums erfolgt nach dem abhängigen Anspruch 3 in einem definierten Zeitintervall von mindestens der Größe einer halben Wellenlänge (Abtasttheorie) (siehe auch Figur 2).

Das Verfahren erhöht im Vergleich zu herkömmlichen Verfahren die Wiedergabetreue wesentlich, und zwar ohne die zu speichernde Datenmenge zu erhöhen, bzw. signifikant zu erhöhen. Das Verfahren ermöglicht nach dem Prüflauf des EMAT-Molches aus den in reduzierter Weise abgelegten Daten eine Rekonstruktion der Ultraschalleinhüllenden ohne Informationsverlust, zumindest ohne signifikanten Informationsverlust. Das Verfahren bewertet über die Verfahrensgruppe der Größenbestimmung - und das ist mit ein entscheidendes, leistungsfähiges Merkmal - die Breite der Einhüllenden. Über die Verfahrensgruppe zur Bestimmung des Signaluntergrundes wird die Größenbestimmung in ihrer Qualität bestimmt .

Die Zeichnung besteht aus den Figuren 1 bis 5, die jeweils zeigen:
- Figur 1: das digitalisierte und gleichgerichtete Ultraschallsignal;
- Figur 2: die Peakdarstellung des Ultraschallsignals;
- Figur 3: das Signalbild des Ultraschallsignals nach der Selektion der Peakmaxima in Vektordarstellung;
- Figur 4: die Envelopedarstellung des Ultraschallsignals;
- Figur 5: die Envelopedarstellung mit Ausschluss der Vektoren;
- Figur 6: die Darstellung der Peaks und ihre Mittelwerte;
- Figur 7: die Darstellung der Peaks und der Mittelwerte ohne Defekt.

Die Figuren 1 bis 4 wurden oben im Beschreibungstext schon in Zusammenhang gebracht. In Figur 1 ist bei ca. 150 µs das signifikante Echo eines Risses dargestellt. Bei ca. 300 µs und bei ca. 370 µs sind die Transmissionssignale der benachbarten Sender zu erkennen. Die Sensoranordnung ist in der GB 2 380 794 A erläutert (siehe hierzu insbesondere Figur 3 und die Beschreibungspassagen Seite6, Zeile 26, bis Seite 7, Zeile 18, darin).

Die Envelope-Vektoren-Darstellung des Ultraschallsignals in Figur 4 zeigt im Vergleich mit Figur 3 eine bessere Darstellung der Ultraschalleinhüllenden als die reine Vektordarstellung.

In Figur 5 ist die Envelope-Vektoren-Darstellung mit Ausschluss der Vektoren, gekennzeichnet mit 34, dargestellt, deren Envelope-Breiten eine Mindestbreite unterschreiten.

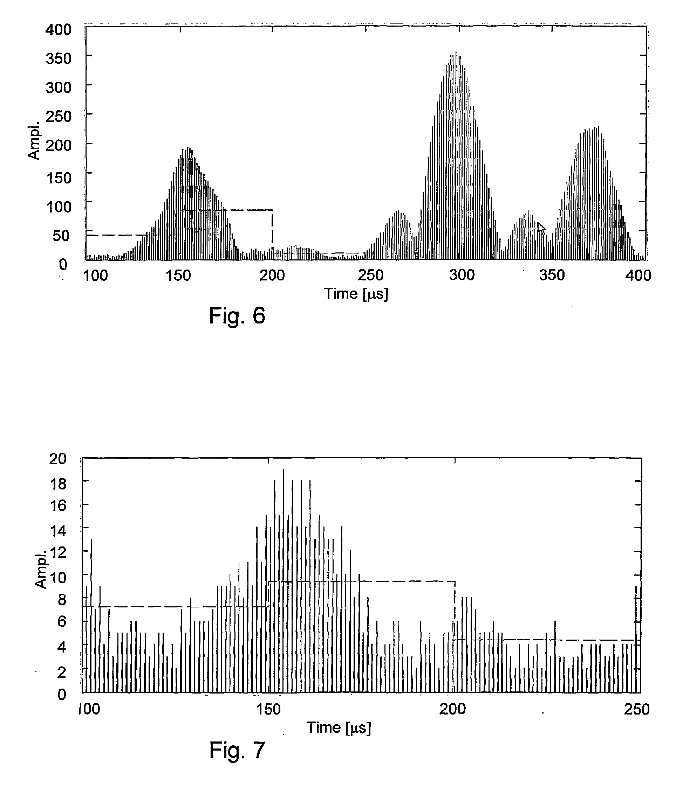

Die Darstellung der Peaks und der Mittelwerte der Peaks ist in Figur 6 in drei Intervallen: 100 µs -150µs, 150 µs - 200 µs, 200 µs - 250 µs dargestellt.

Zur Verdeutlichung zeigt Figur 7 in einem veränderten / vergrößerten Maßstab, vertikal als auch horizontal, die Darstellung der Peaks und der Mittelwerte der Peaks in drei Intervallen aus Figur 6(100 µs -150 µs, 150 µs - 200 µs, 200 µs - 250µs) eines US-Echo ohne Defekt.

## Patentansprüche

1. Verfahren zur Reduktion von digitalisierten Daten in einem (Electro Magnetic Accoustic Transducer-) EMAT-Molch, der durch eine Rohrleitung fährt, um Defektstellen, wie Risse, Korrosionen, Zerstörungen, über Messung eines analogen Ultraschallechos zu detektieren und die daraus gewonnenen digitalisierten Daten in ihm mit Hilfe von Rechnermodulen so zu komprimieren, dass bei der Datenauslesung nach einer Molchfahrt, die Defektstellen lokalisiert und in ihrer Qualität beurteilt werden können,
bestehend aus zwei Verfahrensgruppen:
- der Größenbestimmung einer Defektstelle und
- der Bestimmung des Signaluntergrunds an einer Defektstelle;
- Verfahrensschritte zur Größenbestimmung basierend auf einem Algorithmus zur Auswahl von Spitzenwerten, der Amplituden-Laufzeit-Paare, sogenannte Vektoren, liefert, die die Maxima der Ultraschall-Einhüllenden anzeigen:
eine Einhüllende/Envelope wird derart gebildet, dass zu jedem ausgewählten Vektor zusätzlich die Breite der Ultraschall-Einhüllenden bestimmt wird,
wozu aus den dem Vektor unmittelbar benachbarten Spitzenamplituden die Minima um jeden Vektor ermittelt werden, die unterhalb der vorgegebenen Schwelle liegen,
der zeitliche Abstand der Minima zum Zeitwert des Vektors abgespeichert wird,
falls zwischen zwei Vektoren die Spitzenamplitude nicht die Schwelle unterschreiten, wird die Spitze mit den minimalen Amplitudenwerten als Minimum bestimmt, welches nachfolgendes Minimum des ersten Vektors und vorhergehendes Minimum des folgenden Vektors ist,
Envelope-Vektoren, deren Breite, die sogenannte Envelope-Breite, einen Schwellwert unterschreitet, werden ausgeschlossen,
Envelope-Vektoren, deren Form, die sogenannte Envelope-Form, nicht einer vorgegebenen Charakteristik entspricht, werden ausgeschlossen,
wobei die Charakteristik der Envelope-Form durch das Verhältnis der Zeitdifferenzen zwischen dem Zeitwert des Maximums und dem vorhergehenden und dem nachfolgenden Spitzen-/Peakminimum bestimmt wird und innerhalb eines vorgegebenen Zahlenintervalls liegt,
jeder Vektor wird durch drei Amplituden-Laufzeit-Paare erfasst,
die Envelope-Bildung, kombiniert mit der Envelope-Breite und der Envelope-Form, wird in Verbindung beim vorverdichteten /vektorisierten Ultraschallsignal eine Merkmalsextraktion durchgeführt, um zu entscheiden, ob das Ultraschallsignal informationstragende Merkmale enthält und damit zu speichern wäre,
der Datenkompression der selektierten Merkmale wird ohne wichtigen Informationsverlust vorgenommen;
- Verfahrensschritte zur Bestimmung des Signaluntergrunds an einer Defektstelle:
der Zeitbereich des Ultraschallechos wird in Zeitintervallen mit mindestens der Dauer von vier Wellenlängen der angewandten Ultraschallfrequenz mit parametrisierten Startwert und Längewert eingeteilt,
in diesen Zeitintervallen werden die Amplituden der Spitzen zu einem intervallspezifischen Summationswert aufsummiert, der dann durch die Anzahl der Spitzen dividiert und damit.darüber gemittelt wird,
jeder Mittelwerte wird zur Größenbestimmung an der zugeordneten Defektstelle ermittelt und gespeichert.

2. Verfahren nach Anspruch 1, **dadurch gekennzeichnet, dass** die Zeitwerte entsprechend ihrer Bedeutung mit unterschiedlicher/angepasster Auflösung abgelegt werden.

3. Verfahren nach Anspruch 2, **dadurch gekennzeichnet, dass** pro festgelegtem/definiertem Zeitintervall von mindestens der Größe einer halben Wellenlänge das Maximum bestimmt wird.

## Claims

1. Method for reducing digital data in an (Electro Magnetic Acoustic Transducer) EMAT pig, which travels through a pipeline in order to detect defects such as cracks, corrosion, damage, by measuring an analog ultrasonic echo and to compress the digital data obtained in this way in said EMAT pig by means of computer modules so that when the data is read out after a pig run, the defects can be located and evaluated in terms of their quality,
said method comprising two method groups:
- determining the size of a defect and
- determining the signal background at a defect,
- method steps for determining the size based on an algorithm for selecting peak values, said algorithm supplying amplitude/transit time pairs, so-called vectors, which indicate the maxima of the ultrasound envelope:
an envelope is formed in such a manner that the width of the ultrasound envelope is determined additionally for each selected vector,
to which end, the minima around each vector that are below the predetermined threshold are determined from the peak amplitudes in the immediate vicinity of the vector,
the time distance between the minima and the time value of the vector is stored,
if the peak amplitude between two vectors does not fall below the threshold, the peak with the minimum amplitude values is determined as the minimum that is the minimum following the first vector and the minimum preceding the following vector,
envelope vectors, the width of which, the so-called envelope width, falls below a threshold value are excluded,
envelope vectors, the shape of which, the co-called envelope shape, does not correspond to a predetermined characteristic, are excluded,
wherein the characteristic of the envelope shape is determined by the ratio of the time differences between the time value of the maximum and the preceding and the following peaks / peak minimum and lies within a predetermined interval of numbers,
each vector is detected by three amplitude transit pairs,
the forming of the envelope, combined with the envelope width and the envelope shape, a feature extraction is carried out in conjunction with the pre-compressed/vectorised ultrasound signal, in order to decide whether the ultrasound signal includes information-bearing features and would consequently have to be stored,
the data compression of the selected features is performed with no significant loss of information;
- method steps for determining the signal background at a defect:
the time range of the ultrasound echo is divided into time intervals with at least the duration of four wavelengths of the applied ultrasound frequency with parameterized start value and length value,
the amplitudes of the peaks in these time intervals is then added to form an interval-specific summation value, which is then divided by the number of peaks, consequently providing a mean value, each mean value is determined at the associated defect and stored for determining the size.

2. Method according to Claim 1, **characterized in that** the time values are deposited at a different/adapted resolution according to their significance.

3. Method according to Claim 2, **characterized in that** the maximum is defined per established/defined time interval from at least the size of half a wavelength.

## Revendications

1. Procédé pour réduire le volume des données numérisées dans un ramoneur EMAT (Transducteur Acoustique Electromagnétique; Electro Magnetic Accousitc Transducer), qui passe dans une canalisation pour détecter des points défectueux tels que des fissures, des corrosions, de destructions, en mesurant un écho analogique d'ultrasons et pour comprimer les données numérisées ainsi recueillies à l'aide de modules de calcul pour qu'à la lecture des données, après un parcours effectué par le ramoneur, on puisse localiser les points défectueux et évaluer leur qualité,
procédé composé de deux groupes de procédés :
- la détermination de la dimension d'un point défectueux, et
- la détermination de la base du signal d'un point défectueux,
- les étapes de procédé pour déterminer la dimension en fonction d'un algorithme pour sélectionner des valeurs maximales, des paires amplitude-temps de parcours appelé vecteurs indiquant les valeurs maximales de l'enveloppe de l'ultrason :
* on forme une enveloppe en déterminant pour chaque vecteur sélectionné, en plus la largeur de l'enveloppe d'ultrasons,
* pour cela, à partir des amplitudes maximales directement voisines du vecteur, on détermine les valeurs minimales autour de chaque vecteur, valeurs qui se situent en dessous du seuil prédéfini,
* on mémorise l'intervalle de temps entre les valeurs minimales par rapport à la valeur de temps du vecteur,
* dans le cas où entre deux vecteurs, l'amplitude maximale ne passe pas en dessous du seuil, on définit comme minimum le pic avec les valeurs minimales d'amplitude, ce minimum étant le minimum suivant le premier vecteur et le minimum précédant le vecteur suivant,
* on exclut les vecteurs-enveloppe, dont la largeur dite largeur d'enveloppe, passe en dessous d'une valeur de seuil,
* on exclut les vecteurs-enveloppe, dont la forme dite en forme d'enveloppe ne correspond pas à une caractéristique prédéfinie,
* la caractéristique de la forme enveloppe étant définie par le rapport entre les différences de temps comprises entre la valeur de temps du maximum et le minimum de pic précédent et suivant et compris dans un intervalle prédéfini de nombres,
* chaque vecteur est défini par trois paires de valeurs amplitude-temps de parcours,
* la formation de l'enveloppe combinée à la largeur de l'enveloppe et à la forme de l'enveloppe est réalisée en liaison avec une extraction de caractéristiques pour un signal d'ultrasons précomprimé/vectorisé, pour décider si le signal d'ultrasons contient des caractéristiques portant des informations et qui doivent ainsi être mémorisées,
* on effectue la compression des données des caractéristiques choisies sans perte importante d'informations,
- les étapes de procédé pour déterminer le fond du signal d'un point défectueux :
* on subdivise la plage de temps de l'écho des ultrasons en des intervalles de temps ayant au moins la durée de quatre longueurs d'onde de la fréquence des ultrasons utilisée avec une valeur de départ paramétrée et une valeur de longueur,
* dans ces intervalles de temps, on additionne des amplitudes des pics en une valeur somme spécifique à l'intervalle, valeur qui est ensuite divisée par le nombre de pics et ainsi on forme la valeur moyenne,
* chaque valeur moyenne est déterminée pour déterminer les dimensions du point défectueux correspondant et cette valeur est mémorisée.

2. Procédé selon la revendication 1,
**caractérisé en ce que**
les valeurs de temps sont enregistrées selon leur signification, avec une résolution différente/adaptée.

3. Procédé selon la revendication 2,
**caractérisé en ce que**
on détermine le maximum, pour chaque intervalle de temps fixé/défini, ayant au moins la dimension d'une demi-longueur d'onde.
